# EUROPÄISCHE PATENTANMELDUNG

(11) **EP 4 160 446 A1**
(43) Veröffentlichungstag der Anmeldung: **05.04.2023**
(21) Anmeldenummer: 21199832.3
(22) Anmeldetag: 29.09.2021
(51) Int. Cl.: G06F 16/84

(54) **FÄHIGKEITSANALYSE EINER KOMPONENTE INNERHALB EINER INDUSTRIELLEN AUTOMATISIERUNGSANLAGE**

(71) Anmelder: Siemens Aktiengesellschaft, 80333 München (DE); Friedrich-Alexander-Universität Erlangen-Nürnberg, 91054 Erlangen (DE)
(72) Erfinder: Bakakeu Ngassam, Romuald Jupiter, 91054 Erlangen (DE); Elsterer, Stefan, 90451 Nürnberg (DE); Elting, Michael, 90443 Nürnberg (DE)
(74) Vertreter: Siemens Patent Attorneys

(57) **Zusammenfassung**

Die Erfindung betrifft ein Verfahren zur Fähigkeitsanalyse einer Komponente innerhalb einer industriellen Automatisierungsanlage sowie ein zugehöriges Computerprogrammprodukt und eine zugehörige Analysevorrichtung. Dabei wird in einem ersten Abgleich ein Vergleichs-Knowledge-Graph aus einem Informationsmodell mit einem Vorlage-Knowledge-Graph verglichen zum Identifizieren von potentiellen Fähigkeitsinstanzen und in einem zweiten Abgleich mindestens eine der erkannten potentiellen Fähigkeitsinstanzen mit mindestens einem zu der Automatisierungsanlage zugehörigen Fähigkeits-Knowledge-Graphen verglichen zum Ermitteln einer Fähigkeitsübereinstimmung in Abhängigkeit von einem ermittelten zweiten Übereinstimmungsgrad.

## Beschreibung

Die Erfindung betrifft ein Verfahren zur Fähigkeitsanalyse einer Komponente innerhalb einer industriellen Automatisierungsanlage sowie ein zugehöriges Computerprogrammprodukt und eine zugehörige Analysevorrichtung.

Der Trend in der Industrieautomatisierung geht hin zum Einsatz von autonomen Maschinen, insbesondere Robotern, die verschiedene Fähigkeiten aufweisen. Beispielsweise sind in einer Anlage eine Vielzahl von Maschinen im Einsatz, die eine Vielzahl von unterschiedlichen Fähigkeiten aufweisen und die entsprechend ihrer jeweiligen individuellen Fähigkeiten für eine Automatisierungsaufgabe eingesetzt werden. Die Fähigkeiten werden auch Skills genannt und beschreiben beispielsweise Schritte, die eine Maschine in einem Fertigungsverfahren aufgrund ihrer Mechanik und Bewegungssteuerung durchführen kann. Gängige Skills sind Pick & Place Fähigkeiten zum Aufnehmen und Umlagern von Teilen, beispielsweise von Werkstücken oder von zu verpackenden Produkten. Ferner sind Einfüge-, Fräs-, Bohr- oder Stanz-Skills gängig.

Typischerweise erfolgt ein Austausch über solche Fähigkeiten zwischen Maschinen untereinander oder zwischen Maschinen und einem koordinierenden System. Die Basis dafür ist ein einheitliches Verständnis und eine einheitliche Interpretation von Skills. Daher werden bislang Anpassungen einzelner Maschinen oder Anlagen oder Anlagenteile dokumentiert und protokolliert um beispielsweise in einer Inbetriebnahmephase dann manuelle Änderungen vorzunehmen. Alternativ werden präventiv aufwendige Ausnahmebehandlungen implementiert, um aufgrund von inkonsistenten Anpassungen resultierende Fehler beherrschen zu können.

Vor diesem Hintergrund ist es eine Aufgabe der vorliegenden Erfindung eine Fähigkeitsanalyse einer Komponente zu verbessern. Diese Aufgabe wird durch die Merkmale der unabhängigen Ansprüche gelöst. Vorteilhafte Ausgestaltungen sind in den abhängigen Ansprüchen angegeben.

Die Erfindung betrifft ein computerimplementiertes Verfahren zur Fähigkeitsanalyse einer Komponente innerhalb einer industriellen Automatisierungsanlage mit mehreren Komponenten mit den Schritten Erhalten eines Informationsmodells mindestens einer Komponente der mehreren Komponenten, Bereitstellen mindestens eines Vorlage-Knowledge-Graphs, wobei der mindestens eine Vorlage-Knowledge-Graph mittels eines Fähigkeits-Metamodels eine Fähigkeitsstruktur semantisch beschreibt, Transformieren des Informationsmodells in eine mit dem MetaModell kompatible Fähigkeitsontologie zum Erstellen eines Vergleichs-Knowledge-Graphs, Abgleichen des Vergleichs-Knowledge-Graphs mit dem Vorlage-Knowledge-Graph zum Identifizieren von potentiellen Fähigkeitsinstanzen im Informationsmodell in Abhängigkeit von einem ermittelten ersten Übereinstimmungsgrad und Abgleichen mindestens einer der erkannten potentiellen Fähigkeitsinstanzen mit mindestens einem zu der Automatisierungsanlage zugehörigen Fähigkeits-Knowledge-Graphen zum Ermitteln einer Fähigkeitsübereinstimmung in Abhängigkeit von einem ermittelten zweiten Übereinstimmungsgrad.

Als industrielle Automatisierungsanlage kommt insbesondere eine Automatisierungsanlage in der diskreten Fertigung oder in der Prozessautomatisierung zum Einsatz. Beispielsweise sind darunter Fertigungsanlagen zu verstehen, in welchen Bauteile gefertigt, verarbeitet, verpackt oder transportiert werden. Beispielsweise sind darunter auch Anlagen in der Prozessindustrie zu verstehen, in welchen beispielsweise Flüssigkeiten oder Gase verarbeitet, abgefüllt oder gelagert werden.

In der industriellen Automatisierungsanlage kommen Bearbeitungsmaschinen, Werkzeugmaschinen, Transportmittel wie Förderbänder oder individuell ansteuerbare Transportcarrier, Schneid- oder Verpackungsmaschinen, Roboter, AGVs (autonomous guided vehicles), sowie die zugehörigen Steuerungen, Antriebe, Umrichter, Motoren, sowie Ventile, Stellventile, Sensoren etc. zum Einsatz.

Beispielsweise ist für einen Teil dieser Komponenten oder für alle Komponenten ein Informationsmodell in der Anlage verfügbar. Dafür wird beispielsweise der Standard OPC UA für den Datenaustausch innerhalb der Anlage verwendet. Mittels OPC UA werden beispielsweise Maschinendaten innerhalb einer Fertigungsanlage semantisch beschrieben und über vorhandene Kommunikationskanäle ausgetauscht.

Beispielsweise ist die Komponente ein neuer Teilnehmer innerhalb der Automatisierungsanlage. Wird eine solche neue Komponente innerhalb des Automatisierungsnetzwerkes erkannt, so können beispielsweise vom Teilnehmer angebotene Informationen durch ein zentrales oder dezentrales Managementsystem der Automatisierungsanlage gelesen werden. Beispielsweise wird ein Diagnose Tool während einer Inbetriebnahmephase eingesetzt. Ferner kann ein Engineeringtool, eine Anlagenvisualisierung, ein Prozessplanungstool etc. eingesetzt werden. Beispielsweise liegen die Informationen im Informationsmodell des OPC UA Servers des Teilnehmers vor.

Beispielsweise werden in einem darauffolgenden Schritt das Informationsmodell oder Teile des Informationsmodells, beispielsweise ein vordefinierter Namespace, in eine Fähigkeitsontologie transformiert.

Es wird zudem, zeitlich vor oder nach den oben beschriebenen Schritten oder zugleich, ein Vorlage-Knowledge-Graph bereitgestellt, der eine Fähigkeitsstruktur semantisch beschreibt. Dafür bedient er sich eines Fähigkeits-Metamodells.

Die Fähigkeitsontologie, in die das Informationsmodell transformiert wird, muss mit dem Fähigkeits-Metamodell des Vorlage-Knowledge-Graphs kompatibel sein. Beispielsweise wird innerhalb der Automatisierungsanlage eine Semantik der Skills vorgegeben, welche einheitlich befolgt werden soll. Beispielsweise wird einheitlich eine Ontologie vorgegeben, die sowohl für den Vorlage-Knowledge-Graph als auch als Fähigkeits-Ontologie des Vergleichs-Knowledge-Graphs verwendet wird. Beispielsweise richtet sich die Transformation des Informationsmodells nach dem Fähigkeits-Metamodell, das die Fähigkeitsstruktur beschreibt. Werden verschiedene Vorlage-Knowledge-Graphen, beispielsweise aus unterschiedlichen Quellen oder über die Zeit variierend, innerhalb der Automatisierungsanlage verwendet, die auf verschiedenen Fähigkeits-Metamodellen basieren, so kann die Transformation daran angepasst werden.

Eine Ontologie legt eindeutig fest, welche mathematischen Regeln, welche Begriffe und Beziehungen oder welche Elemente oder Attribute angewendet werden können, um eine Fähigkeit zu beschreiben und wie diese zu interpretieren sind.

Der Vorlage-Knowledge-Graph kann als eine Art Fähigkeit-Template oder Skill-Template angesehen werden, das in allgemeiner Form definiert, wie eine beliebige Fähigkeit, beispielsweise eine Produktionsfunktionalität oder Bearbeitungsfunktion innerhalb der Automatisierungsanlage, in Hinblick auf ihre Struktur zu beschreiben ist. Die Struktur wird beispielsweise durch Typen von Komponenten und logischen Beziehungen oder Verknüpfungen, durch Typen von Eigenschaften, oder mathematische Vorschriften zur Beschreibung einer Fähigkeit gebildet. Die Struktur wird im Fähigkeits-Metamodel abgebildet. Dabei beschreibt das Skill-Template generell eine Fähigkeit, unabhängig davon, um was für eine konkrete Fähigkeit, z.B. "Fräsen", "Bohren", es sich handelt. Die Beschreibung des Skills ist so generalisiert, dass sie einem Datenmodell den Typ "Fähigkeit" oder "Fähigkeitsbeschreibung" zuschreibt.

Liegt das Informationsmodell in der Fähigkeitsontologie vor, so kann ein Vergleichs-Knowledge-Graph erstellt werden. Aufgrund der Kompatibilität können der Vorlage-Knowledge-Graph und der Vergleichs-Knowledge-Graph miteinander verglichen werden. Das in die Fähigkeitsontologie transformierte Informationsmodell bildet somit den Vergleichs-Knowledge-Graphen.

Durch den Abgleich des Vergleichs-Knowledge-Graphs mit dem Vorlage-Knowledge-Graph ist eine Aussage darüber zu erhalten, ob in dem Informationsmodell der Vorlage-Knowledge-Graph zumindest teilweise wiederzufinden ist. Dies ist der Fall, wenn ein bestimmter erster Übereinstimmungsgrad erreicht wurde. Dieser erste Übereinstimmungsgrad kann auch als Matching Score bezeichnet werden. Beispielsweise wird ein Graph-Matching Verfahren ausgeführt, bei dem der kleinste Subgraph in dem Vergleichs-Knowledge-Graph ermittelt wird, der alle Eigenschaften erfüllt, die über den Vorlage-Knowledge-Graph gefordert werden. Der Matching Score spiegelt dann den Deckungsgrad wider und damit eine Qualität für die Abbildung oder die Übereinstimmung zwischen den zwei Knowledge-Graphen. Je größer der aufgefundene Subgraph, desto größer der ermittelte Übereinstimmungsgrad. Beispielsweise wird nur dann eine potentielle Fähigkeitsinstanz erkannt, wenn der ermittelte erste Übereinstimmungsgrad einen bestimmten vorgebbaren Grenzwert übersteigt. Andere erkannte Strukturen mit einem ersten Übereinstimmungsgrad keiner als dem Grenzwert werden verworfen. Somit werden nur erfolgsversprechende Kandidaten als potentielle Fähigkeitsinstanzen aufgenommen.

Bei einem Graph-Matching-Verfahren wird beispielsweise davon ausgegangen, dass alle Knoten und Relationen in einer Ontologie durch eine feststehende Liste von Eigenschaften definiert sind, die verifiziert sind. Ist eine Eigenschaft nicht verifiziert, dann ist das Objekt, dem diese Eigenschaft anhaftet, nicht Teil des Modells oder das Modell ist inkonsistent. Jeder Graph wird durch eine vollständige Liste aller Eigenschaftsaxiome repräsentiert, die durch die Kombination aller Elemente des Graphs sowie durch Logikberechnungen ermittelten Elemente entsteht. Das Graph Matching besteht darin, ein Minimum aller verbundenen Subgraphen aufzufinden, so dass alle Eigenschaftsaxiome der feststehenden Liste verifiziert sind. Der Matching-Score gibt dann beispielsweise den Prozentsatz der verifizierten Axiome an.

Bei einem ersten Übereinstimmungsgrad von annähernd 100% hat man beispielsweise einen Hinweis auf eine nicht konforme Abbildung gefunden. Solch ein Fehler kann in einem Diagnosesystem angezeigt werden. Beispielsweise werden alle fehlenden oder fehlerhaften Eigenschaften einer Skill-Instanz angezeigt und erleichtern somit eine mögliche Fehlerbehebung.

Beispielsweise können zusätzlich Kriterien vorgegeben werden, bei deren Vorliegen ein Identifizieren als potentielle Fähigkeitsinstanz ausgeschlossen werden soll, selbst wenn der erste Übereinstimmungsgrad erreicht wurde. Beispielsweise soll mit Sicherheit ausgeschlossen werden, dass eine Adresse als Kandidat für ein Skill erkannt wird, wenn eine Verknüpfung einer bestimmten Art existiert.

Als Ergebnis dieses Abgleichs werden potentielle Fähigkeitsinstanzen identifiziert. Beispielsweise werden in dem gesamten untersuchten transformierten Informationsmodell ein oder mehrere potentielle Fähigkeitsinstanzen erkannt und diese dann ausgegeben. Beispielsweise wird dafür ein Link zu einem Knoten oder eine Koordinate eines Knotens aus der Fähigkeitsontologie in einer Liste ausgegeben. Beispielsweise wird ferner der Graph jedes Elements der Liste, also jeder potentiellen Fähigkeitsinstanz, abgespeichert. Beispielsweise wird zusätzlich eine Angabe über den ersten Übereinstimmungsgrad mit ausgegeben oder eine Sortierung anhand des ersten Übereinstimmungsgrads vorgenommen. Beispielsweise wird ferner eine Angabe mit ausgegeben, die Abweichungen der beiden Graphen beschreibt, beispielsweise welche Eigenschaften des Vorlage-Knowledge-Graphen nicht erfüllt werden oder aufgefunden wurden in dem Vergleichs-Knowledge-Graph.

In einem darauffolgenden Schritt erfolgt ein zweiter Abgleich, der sich die Ergebnisse des ersten Abgleichs zu Nutze macht. Mindestens eine der erkannten Fähigkeitsinstanzen - beispielsweise die eine im Falle einer einzigen erkannten potentiellen Fähigkeitsinstanz oder die mit dem höchsten ersten Übereinstimmungsgrad im Falle mehrerer - wird mit einem zu der Automatisierungsanlage zugehörigen Fähigkeits-Knowledge-Graphen abgeglichen. Bei diesem zu der Automatisierungsanlage zugehörigen Fähigkeits-Knowledge-Graph handelt es sich um einen vorgebbaren oder vorgegebenen Fähigkeits-Knowledge-Graph, der beispielsweise eine konkrete Fähigkeit, die an den Automatisierungsanlage benötigt oder gefordert wird, beispielsweise um eine Automatisierungsaufgabe durchführen zu können, semantisch beschreibt. Beispielsweise wird dieser Fähigkeits-Knowledge-Graph vorgegeben, indem es sich um eine zuvor schon ermittelte potentielle Fähigkeitsinstanz handelt, um Doppelungen, eventuell auch mit Inkonsistenzen behaftete Doppelungen, zu erkennen.

Ferner ist der zugehörige Fähigkeits-Knowledge-Graph beispielsweise in einem Repository abgespeichert oder innerhalb der Automatisierungsanlage jederzeit abrufbar, beispielsweise aus einer Cloud-Einheit. Bei dem Fähigkeits-Knowledge-Graph handelt es sich um eine semantische Beschreibung einer konkreten Fähigkeit oder einer konkreten potentiellen Fähigkeit, d.h. es wird beispielsweise ein Bearbeitungs-Skill wie "Bohren" oder ein Handhabungs-Schritt wie "Pick&Place" beschrieben. Es wird beispielsweise ferner eine potentielle Fähigkeit semantisch beschrieben, ohne dass bereits die Notwendigkeit der Verfügbarkeit dieser Fähigkeit innerhalb der Automatisierungsanlage feststehen muss oder diese Fähigkeit in der Automatisierungsanlage bekannt sein muss.

Beispielsweise werden Node-Sets abgespeichert, z.B. als xmlfile, in welchem alle benötigten Skills datentechnisch beschrieben sind, vorzugsweise in der Fähigkeitsontologie.

Während im Vorlage-Knowledge-Graph also eine Fähigkeit abstrakt anhand ihrer Anzahl oder Art vorgesehener Komponenten, Anzahl oder Art der Beziehung zu anderen Komponenten, Möglichkeit der Klassifizierung oder Benennung, oder anhand anderer Merkmalstypen definiert ist, beschreibt der Fähigkeits-Knowledge-Graph eine konkrete Fähigkeit anhand in der Ontologie enthaltener Komponenten, Beziehungen zu anderen Komponenten, Klassifizierungen oder Benennungen oder anhand anderer Merkmale. Beispielsweise fordert der Vorlage-Knowledge-Graph, dass der gesuchte Knoten, der target matching node, u.a. die Eigenschaftsaxiome hat, dass zwei beliebige Komponenten mit dem Knoten verknüpft sind, wovon für eine davon zwei Objekteigenschaften beliebiger Art vorgesehen sind und für die andere zwei Methoden beliebiger Art. Der Fähigkeits-Knowledge-Graph hat hingegen Eigenschaftsaxiome, die beispielsweise konkrete, in der Ontologie eindeutig gekennzeichnete Komponenten als Subkomponenten eines Knotens definieren und für eine der Subkomponenten die konkrete verfügbare Methode, für die andere die Objekteigenschaften "current state" und "last transition" fordern.

Beispielsweise legt ein Vorlage-Knowledge-Graph fest, dass eine Skill-Instanz von der Klasse "Skilltype" sein sollte. Diese sollte einen Namen (Label) und zwei Komponenten der Klasse "BaseObjectType" mit den Bezeichnungen "StateMachine" und "Invocation" haben. Die Komponente "StateMachine" sollte ein Property mit dem Namen "CurrentState" haben und die Komponente "Invocation" sollte zwei verschiedene Methoden mit den Bezeichnungen "Start" und "GetResults" haben. Je mehr Informationen im Skill-Template bereitgestellt werden, desto spezifischer und detaillierter wird das Template. Man kann beispielweise noch mehr Details zu den Methoden "Start" und "GetResults" hinzufügen, indem man ihre Parameter spezifiziert.

Somit wird mit dem Vorlage-Knowledge-Graph nur die Struktur der Fähigkeit oder eine Graph Signatur einer Fähigkeit beschrieben. Beim ersten Abgleich werden erfolgsversprechende Ausschnitte des Informationsmodells mittels einzelner Knoten in der Fähigkeitsontologie ausgewählt. Aus dieser Auswahl an potentiellen Fähigkeitsinstanzen werden einzelne einem zweiten Abgleich unterzogen, und zwar mit konkreten Fähigkeits-Knowledge-Graphen oder weiteren potentiellen Fähigkeitsinstanzen, die so wie die potentiellen Fähigkeitsinstanzen nicht nur eine Struktur der Fähigkeit, sondern die Fähigkeit selbst definieren.

So werden vorteilhaft in einer industriellen Automatisierungsanlage das Discovery, also das Auffinden von Skills, sowie deren Analyse ermöglicht. Dadurch können neue unbekannte Skills erkannt werden. Dafür wird eine potentielle Fähigkeitsinstanz mit möglichst hohem ersten Übereinstimmungsgrad ermittelt sowie darauffolgend eine Fähigkeitsübereinstimmung mit einem niedrigen zweiten Übereinstimmungsgrad.

Ebenso können bekannte Skills einer neuen Komponente erkannt werden. Dafür wird eine potentielle Fähigkeitsinstanz mit möglichst hohem ersten Übereinstimmungsgrad identifiziert. Der zweite Übereinstimmungsgrad sollte ebenfalls über einem zweiten Grenzwert liegen, damit eine ausreichende Ähnlichkeit zwischen dem vorliegenden Skill der neuen Komponente und einem bekannten Skill besteht. Ein zweiter Übereinstimmungsgrad von niedriger als 100% weist darauf hin, dass gegebenenfalls geringere Abweichungen zwischen den Definitionen oder Inkonsistenzen in den verschiedenen Ontologien vorliegen, die optional nachfolgend angeglichen werden. Beispielsweise liegen Inkonsistenzen bei Parametertypen oder -namen vor.

Eine Unschärfe beim Abgleich von potentieller Fähigkeitsinstanz und Fähigkeits-Knowledge-Graph ist am zweiten Übereinstimmungsgrad ablesbar und kann beispielsweise dazu führen, dass die potentielle Fähigkeitsinstanz trotz einer gewissen Abweichung als bekannter Skill erkannt wird, oder beispielsweise dazu führen, dass eine Inkonsistenz erkannt wird und je nach verfügbaren Details bei der Analyse der Abweichungen zudem Vorschläge oder Maßnahmen zur Fehlerbehebung oder zur besseren Integration abgeleitet werden können. Insbesondere sprachliche Abweichungen bei der Benennung von Fähigkeiten oder Parametern oder Unterschiede bei der Reihenfolge von Parametern sollen bis zu einem gewissen Grad als Unschärfe akzeptiert werden und dennoch zu einer Fähigkeitsübereinstimmung führen. Somit werden Duplikate im semantischen Sinne aufgefunden.

Zudem werden vorteilhaft Überprüfungen offline konfigurierter Skills beim Inbetriebnehmen einer Anlage ermöglicht. Ferner können Updates einer Maschine oder Anlage beispielsweise im Engineering-Prozess unterstützt werden, indem überprüft wird, ob sich in der Anlage verfügbare Skills geändert haben oder noch der Spezifikation entsprechen. Solche Diagnose-Mechanismen sind auch online durchführbar.

Gemäß einer Ausgestaltung liegt der Fähigkeits-Knowledge-Graph in einer in die Fähigkeitsontologie transformierbaren Ontologie vor. Handelt es sich bei dem Fähigkeits-Knowledge-Graph um eine zuvor identifizierte potentielle Fähigkeitsinstanz, so wurde diese ebenfalls aus dem Informationsmodell via Transformation erstellt und liegt bereits in der Fähigkeitsontologie vor. Wird der Fähigkeits-Knowledge-Graph beispielsweise aus einem Repository erhalten, so kann er bereits direkt in der Fähigkeitsontologie vorliegen oder in einer Ontologie, die wiederum in die Fähigkeitsontologie transformierbar ist. Somit ist sichergestellt, dass der zweite Abgleich einfach möglich ist.

Gemäß einer Ausgestaltung beschreibt der Fähigkeits-Knowledge-Graph Eigenschaften einer von der Automatisierungsanlage benötigten oder geforderten Fähigkeit semantisch. Beispielsweise ist in einer Automatisierungsanlage mit autonom agierenden Maschinen, die Produktionsabläufe selbstständig untereinander aushandeln oder vereinbaren, aufgrund einer Prozessliste oder Bill of Prozess bekannt, welche Produktionsschritte zur Herstellung eines Produkts durchzuführen sind. Daraus lassen sich von einem übergeordneten Orchestrator innerhalb der Anlage Fähigkeiten ableiten, die benötigt werden. Nach Maschinen mit solchen benötigten Fähigkeiten wird mittels des vorgeschlagenen Verfahrens gesucht. Beispielsweise sucht sich in einem anderen Szenario eine autonom agierende Maschine eine weitere Maschine, um in kooperierender Vorgehensweise einen Fertigungsschritt durchzuführen. Dafür wird durch die Maschine eine Fähigkeit angefordert, für die ebenfalls mit dem vorgeschlagenen Verfahren eine entsprechende Maschine auffindbar ist.

Gemäß einer Ausgestaltung wird der Fähigkeits-Knowledge-Graph durch eine weitere identifizierte Fähigkeitsinstanz gebildet. So können vorteilhaft bereits im System bekannte Fähigkeiten erkannt und bei Abweichungen im zweiten Abgleichen Inkonsistenzen erkannt werden. Diese können kenntlich gemacht werden, kenntlich gemacht oder ferner behoben werden.

Gemäß einer Ausgestaltung wird eine potentielle Fähigkeitsinstanz erkannt, wenn der ermittelte erste Übereinstimmungsgrad einen ersten Grenzwert überschreitet. Je mehr Unsicherheiten im System bestehen, was die Struktur der Fähigkeit angeht oder je mehr Abweichungen oder Unschärfen man zulassen möchte, um dennoch eine Fähigkeit zu erkennen, desto niedriger wählt man den Grenzwert. Ist das System sehr gut beschrieben und sind neue hinzukommende Komponenten mit sehr genauen Modellen ausgestattet, kann der Grenzwert hoch angesetzt werden, um nur Instanzen zu erkennen, die mit sehr hoher Wahrscheinlichkeit auch zu einer Übereinstimmung mit einem Fähigkeits-Knowledge-Graph führen. Subgraphen mit zu geringer Übereinstimmung, die entsprechend wenig aussichtsreiche Kandidaten sind, werden so vorteilhaft bereits beim ersten Abgleich verworfen.

Gemäß einer Ausgestaltung legt der erste Grenzwert einen Anteil an Eigenschaften des Vorlage-Knowledge-Graphen fest. Beispielsweise sollen mindestens 80% der durch das Template geforderten Eigenschaften vorliegen.

Gemäß einer Ausgestaltung ist wird das Informationsmodell im OPC UA Standard empfangen. Dies ermöglicht eine besonders einfache Transformation in die Fähigkeitsontologie. Beispielsweise erfolgt eine Transformation von OPC UA in OWL, kurz für Web Ontology Language, eine formale Beschreibungssprache für Ontologien.

Gemäß einer Ausgestaltung wird zum Bereitstellen des Vorlage-Knowledge-Graphen ein OPC UA Informationsmodell um Fähigkeits-spezifische Modellierung erweitert und als OPC UA-basiertes Fähigkeits-Metamodell bereitgestellt. Ein OPC UA-basiertes Fähigkeits-Metamodell formalisiert beispielsweise alle OPC UA Grundkonzepte und erweitert diese um formale domainspezifische Eigenschaften und Inferenzregeln. Beispielsweise werden grundlegende Konzepte wie "HasComponent", "Has-TypeDefinition", "Object", "ObjectType" etc. direkt abgebildet. Mathematische Eigenschaften oder Elemente wie "Domain", "Range" oder "Kardinalität" werden in der Erweiterung von Referenzen abgebildet. Beispielsweise kann eine "HasSkill"-Referenz nur von einem Objekt vom Typ/Klasse "Maschine" auf ein Objekt vom Typ/Klasse "SkillType" angewendet werden. Die Beziehung ("Maschine01", "HasSkill", "Objekt001") impliziert, dass "Objekt001" nur vom Typ/Klasse "SkillType" sein kann.

Gemäß einer Ausgestaltung wird der Vorlage-Knowledge-Graph in der Fähigkeitsontologie des Vergleichs-Knowledge-Graphen bereitgestellt. Dies ermöglicht einen besonders einfachen ersten Abgleich, bei dem keine weitere Transformation nötig ist, um die Fähigkeitsinstanzen ermitteln zu können.

Gemäß einer Ausgestaltung wird eine Fähigkeitsübereinstimmung erkannt, wenn der ermittelte zweite Übereinstimmungsgrad einen zweiten Grenzwert überschreitet. Beispielsweise wird als Folge der erkannten Fähigkeitsübereinstimmung die Fähigkeit als verfügbar oder zugehörig zu der Komponente hinterlegt. Beispielsweise wird diese Fähigkeit hinterlegt, um eine Verwendung der Komponente für diese Fähigkeit zu ermöglichen. Beispielsweise kann die Komponente dann für die Planung der Automatisierungsaufgabe innerhalb der Anlage verwendet werden, wenn die erkannte Fähigkeit benötigt wird. Ferner kann die erkannte Fähigkeit auch lediglich als Mitteilung in einer für einen menschlichen Nutzer lesbaren Form ausgegeben werden.

Soll beispielsweise eine als komplett und korrekt vermutete Anlagenkonfiguration überprüft werden, so würde man einen eher niedrigen zweiten Grenzwert festlegen, da dabei selbst grobe Konfigurationsunterschiede gefunden werden sowie vorteilhafterweise auch Hinweise auf Lösungsansätze gegeben werden. Bei einer Inbetriebnahme oder bei einer Überwachung zur Laufzeit kann vorteilhaft ein eher hoher zweiter Grenzwert angenommen werden, um selbst kleinste Abweichungen feststellen zu können. Auch für Szenarien, in welchen Skills von Fremdsystemen erkannt werden sollen, wird ein eher niedriger Grenzwert angenommen, um die Skills des Grenzwerts überhaupt im System verfügbar zu machen oder zu hinterlegen.

Gemäß einer Ausgestaltung umfasst das Abgleichen mindestens einer der erkannten potentiellen Fähigkeitsinstanzen mit dem mindestens einen Fähigkeits-Knowledge-Graphen ein Ermitteln von Abweichungen. Beispielsweise soll das zweite Abgleichen eine konkrete Handlungsempfehlung bewirken, die Abweichungen berücksichtigt oder ferner bewertet. Beispielsweise soll neben der Analyse, dass eine hohe Übereinstimmung, nämlich über dem zweiten Grenzwert, erkannt wurde, auch eine Analyse erfolgen, worin die Unterschiede in der Skill-Beschreibung liegen, sofern keine 100% Übereinstimmung vorliegen. Dafür können die Abweichungen beispielsweise derart klassifiziert werden, dass erkennbar wird, welches Element oder welche Elemente oder Attribute oder Eigenschaften des Skills betroffen sind.

Vorteilhafterweise sind mit dem vorgeschlagenen Verfahren Unstimmigkeiten leicht zu erkennen und aufzulösen, auch wenn beispielsweise Änderungen in den Skillbeschreibungen nicht durchgängig dokumentiert oder protokolliert wurden, eine Versionierung lückenhaft aufgeführt ist oder Beschreibungen nicht aktuell gehalten werden. Solche Unstimmigkeiten fallen somit frühzeitig auf und bewirkt beispielsweise keinen Abbruch oder Mehraufwand bei der Inbetriebnahme.

Es muss vorteilhaft weniger Zeit in das Debugging durch Experten, die Wissen in beiden Domänen, nämlich Laufzeitsystem und Skill-Modellierung, haben, investiert werden. Durch die Fehlertoleranz beim Abgleich von Fähigkeiten können bei der Implementierung Mängel bei der Sorgfalt und Disziplin beim Nachziehen von Änderungen oder bei der Dokumentation ausgeglichen werden.

Gemäß einer Ausgestaltung werden die ermittelten Abweichungen in der Fähigkeitsontologie oder der Ontologie des Fähigkeits-Knowledge-Graphen beschrieben. Somit wird eine von der geforderten oder benötigten Eigenschaft des Skills abweichende Eigenschaft direkt in der dem System bekannten Ontologie ausgedrückt. Beispielsweise wird eine Liste erstellt mit Eigenschaftsaxiomen, die bei einem Abgleichen als abweichend erkannt wurden. Solche Listen werden vorzugsweise nur erstellt, wenn insgesamt der zweite Übereinstimmungsgrad überschritten wurde.

Gemäß einer Ausgestaltung werden die ermittelten Abweichungen und/ oder die Fähigkeitsübereinstimmung mittels Mitteilungen ausgegeben. Beispielsweise wird eine menschenlesbare Diagnosenachricht generiert. Beispielsweise werden dafür konventionelle "Natural Language Generation" Verfahren, z.B. Surfacing, eingesetzt. Beispielsweise kommen Templates zum Einsatz, die die Meldungen je nach Art der Abweichung automatisiert erstellen.

Gemäß einer Ausgestaltung werden die erkannte potentielle Fähigkeitsinstanz und/ oder der mindestens eine Fähigkeits-Knowledge-Graph basierend auf der ermittelten Abweichung korrigiert. Dafür wird beispielsweise festgelegt, welche der Ontologien als Master fungiert, d.h. welche der Ontologien korrigiert wird. Je nach Anwendungsfall wird die neu erkannte potentielle Fähigkeitsinstanz als Master verwendet und eine bestehende Beschreibung, beispielsweise eine aus einem Repository geladene Beschreibung, korrigiert. Dies ist in Szenarien vorteilhaft, in welchen sich Skill-Beschreibungen mit der Zeit ändern können und die erkannten potentiellen Skillinstanzen somit als aktueller eingestuft werden. Die gefundenen Skill-Unterschiede können ausgeglichen werden, da das System die Semantik und damit nicht nur die Schnittstelle, sondern auch das Verhalten der Skills interpretieren kann.

Die Erfindung betrifft ferner ein Computerprogrammprodukt, das Mittel zur Durchführung des Verfahrens nach einem der obigen Ausführungsbeispiele aufweist, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung in Frage, wie zum Beispiel ein Mikroprozessor.

Die Erfindung betrifft ferner ein Analysevorrichtung einer industriellen Automatisierungsanlage mit mehreren Komponenten, aufweisend
- eine Schnittstelle zum Erhalten einer Informationsmodells mindestens einer Komponente der mehreren Komponenten,
- eine Bereitstellungseinheit zum Bereitstellen mindestens eines Vorlage-Knowledge-Graphs, wobei der mindestens eine Vorlage-Knowledge-Graph mittels eines Fähigkeits-Metamodels Eigenschaften einer vorgegebenen allgemeinen eine Fähigkeitsstruktur semantisch beschreibt,
- eine Transformationseinheit zum Transformieren des Informationsmodells in eine mit dem Fähigkeits-Metamodell kompatible Fähigkeitsontologie zum Erstellen eines Vergleichs-Knowledge-Graphs,
- eine Abgleicheinheit zum Abgleichen des Vergleichs-Knowledge-Graphs mit dem Vorlage-Knowledge-Graph zum Identifizieren von potentiellen Fähigkeitsinstanzen im Informationsmodell in Abhängigkeit von einem ermittelten ersten Übereinstimmungsgrad, sowie zum Abgleichen mindestens einer der erkannten potentiellen Fähigkeitsinstanzen mit mindestens einem zu der Automatisierungsanlage zugehörigen Fähigkeits-Knowledge-Graphen zum Ermitteln einer Fähigkeitsübereinstimmung in Abhängigkeit von einem ermittelten zweiten Übereinstimmungsgrad.

Mit dem vorgeschlagenen Verfahren und der zugehörigen Analysevorrichtung werden neue oder aktualisierte Skills einfacher in einem bestehenden auf Fähigkeitsbeschreibungen basierenden System integriert. Fehler in Skill-Implementierungen werden frühzeitig und ohne manuelle Überprüfung durch Experten erkannt. Der Aufwand bei der Implementierung oder der Invokation neuer Skills durch SCADA- bzw. MES-Systeme wird reduziert sowie die Kontrolle von bereits vorhandenen Skills verbessert. Es bietet sich zudem die Möglichkeit einer kontinuierlichen und automatisierten Analyse von bestehenden Systemen auf Fehler und Differenzen zwischen den Skill-Angebotsseite und Skill-Anforderungsseite.

Beispielsweise ist die Analysevorrichtung in einem Diagnosesystem der Anlage vorgesehen. Sie kann insbesondere in einer Inbetriebnahmephase oder zur Laufzeit der Anlage zu Diagnosezwecken eingesetzt werden. Es kann sich beispielsweise um ein separates System mit eigener Rechnereinheit handeln oder beispielsweise ein Skill-Engineering-Tool. Ebenso kann es sich um eine in ein Engineeringsystem integrierte Analysevorrichtung handeln, beispielsweise um einen Software-Baustein in einem Engineering-Rechner, oder um eine Applikation in einer Cloud oder auf einem Edge-Gerät mit Anschluss zu einer Cloud. Ferner ist auch eine Integration in einem MES-System denkbar.

Beispielsweise sind dabei alle Teilnehmer oder Maschinen oder Produktionssysteme durch eine Beschreibung ihrer Skills definiert, die von einem übergelagerten System, z.B. einem MES (Manufacturing Exekution System) genutzt werden können, um eine Orchestrierung der Teilnehmer zu ermöglichen. In solchen Szenarien kann eine vollständige Abbildung der Produktionsaufgabe erreicht werden. Liegen aufgrund der Heterogenität der Produktionslandschaft diese Informationen in unterschiedlichen Formaten vor, in formaler oder informaler Form oder auch komplett oder inkomplett, so bietet das vorgeschlagene Verfahren oder die Analysevorrichtung eine Möglichkeit diese Informationen automatisch zu lesen oder zu interpretieren, mit einer formalen Vorgabe zu vergleichen oder bei Inkonsistenz, Unvollständigkeit oder Mehrdeutigkeit die fehlenden oder fehlerhaften Einzelheiten der Informationen in einer menschenlesbaren Form zurückzugeben. Somit wird ein Mechanismus zum automatischen Finden und Identifizieren der Skills oder Produktionsfunktionen oder -Fähigkeiten eines Produktionssystems und bei Vorlage einer formalen Vorgabe, zur automatischen und semantischen Überprüfung der gefundenen Skills bereitgestellt. Somit werden Produktionssysteme vorteilhaft erweitert und neu konfiguriert, so dass kein menschliches Eingreifen erforderlich ist, um die Skills des resultierenden Systems zu identifizieren oder zu analysieren.

Die Erfindung wird nachfolgend anhand von Ausführungsbeispielen mit Hilfe der Figuren näher erläutert. Es zeigen:
- Figur 1: eine schematische Darstellung einer Automatisierungsanlage mit Analysevorrichtung gemäß einem ersten Ausführungsbeispiel der Erfindung;
- Figur 2: eine schematische Darstellung zur Veranschaulichung des ersten Abgleichs in einem Verfahren zur Fähigkeitsanalyse einer Komponente gemäß dem ersten Ausführungsbeispiel;
- Figur 3: eine schematische Darstellung zur Veranschaulichung des zweiten Abgleichs in einem Verfahren zur Fähigkeitsanalyse einer Komponente gemäß einem zweiten Ausführungsbeispiel der Erfindung;
- Figur 4: eine schematische Darstellung zur Veranschaulichung einer Fehleranalyse gemäß dem ersten Ausführungsbeispiel der Erfindung.

In den Figuren sind funktionsgleiche Elemente mit denselben Bezugszeichen versehen, sofern nichts anderes angegeben ist.

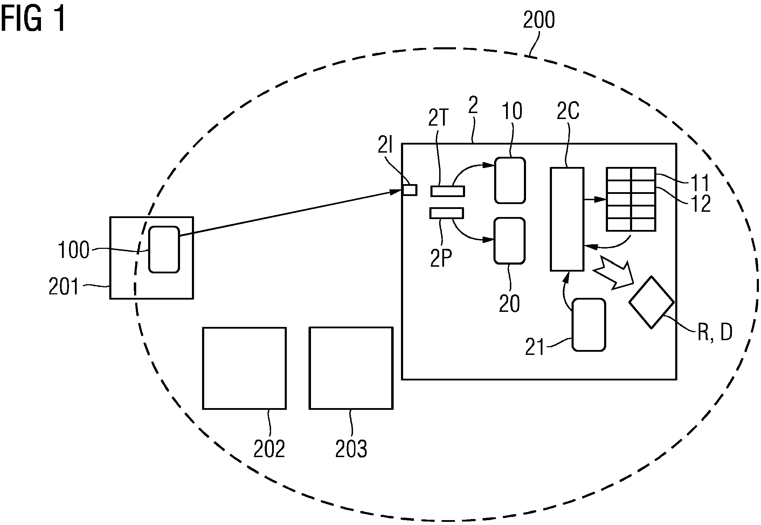

In Figur 1 ist eine industrielle Automatisierungsanlage 200 mit mehreren Komponenten 201, 202, 203 dargestellt sowie mit einer Analysevorrichtung 2. Es wird in einem ersten Ausführungsbeispiel beschrieben, wie ein neuer Teilnehmer als neue Komponente 201 zu der Automatisierungsanlage 200 hinzukommt. Die Automatisierungsanlage 200 führt Automatisierungsaufgaben mit einer Skill-basierten Planung aus. Dafür werden die Skills der beteiligten Komponenten, also Maschinen innerhalb der Anlage, mit Skill-Beschreibungen versehen, die diese anderen Komponenten mitteilen, um dann zu einer möglichst optimierten Planung von Fertigungs- oder Transportschritten basierend auf aktuelle in der Anlage verfügbaren Kapazitäten und Fähigkeiten zu gelangen.

Beispielsweise kommen in der Automatisierungsanlage 200 über die Zeit neue Teilnehmer 201 hinzu. Auch deren Skills sollen in der Automatisierungsanlage 200 bekannt und für die Planung verfügbar sein. Zugleich soll erkennbar sein, ob der neue Teilnehmer 201 benötigte Skills mitbringt oder zu der Konfiguration der Anlage passende Skills vorliegen.

Der neue Teilnehmer 201 meldet sich beispielsweise an einem DHCP Server an und bekommt eine IP-Adresse zugewiesen. Dieser DHCP Server meldet an die Analysevorrichtung 2 der Automatisierungsanlage 200, dass eine Komponente im Netzwerk mit der neu vergebenen IP-Adresse verfügbar ist. Beispielsweise ist in der Automatisierungsanlage 200 ein OPC UA Client vorgesehen, der einen Discovery-Mechanismus über einen OPC UA Discovery Server anstößt. So wird der neue Teilnehmer 201 gefunden und eine Verbindung mit dem OPC UA Server des neuen Teilnehmers aufgebaut. Ist die Verbindung erfolgreich, so wird über eine Schnittstelle 2I eine Session angelegt, über die die Analysevorrichtung 2 der Automatisierungsanlage 200 das OPC UA Informationsmodell 100 des neuen Teilnehmers 201 browsen kann.

Innerhalb der Automatisierungsanlage ist eine Bereitstellungseinheit 2P vorgesehen, die beispielsweise softwaretechnisch auf der Analysevorrichtung 2 implementiert ist. Diese stellt einen oder mehrere Vorlage-Knowledge-Graphen 20 bereit, die jeweils eine Fähigkeitsstruktur mittels eines jeweiligen Fähigkeits-Metamodells semantisch beschreiben. Der Vorlage-Knowlege-Graph 20 ist dafür vorgesehen, in dem Informationsmodell 100 die Nodes oder Subgraphen aufzufinden, die potentiell aufgrund ihrer Struktur eine Fähigkeit der neuen Komponente 201 betreffen können und somit eine potentielle Fähigkeitsinstanz 11, 12 bilden. Damit muss noch keine konkrete Skill-Beschreibung vorliegen, sondern lediglich die Beschreibung einer Struktur, die eine solche Skill-Beschreibung aufweisen würde.

Damit wird eine erste Abgleichstufe realisiert, die aus der Vielzahl der Daten des Informationsmodells 100 mit den zugehörigen logischen Verbindungen nur diejenigen interessanten Stellen herausfiltert und für einen weiteren Abgleich vorhält, die auch Potential haben, eine konkrete in der Anlage geforderte oder gesuchte Fähigkeit zu beschreiben. Damit ist noch völlig offen, was für eine Fähigkeit ein betreffender im ersten Abgleich aufgefundener Subgraph letztlich beschreiben könnte, sondern lediglich, dass aufgrund der Datenstruktur eine beliebige Fähigkeit beschrieben ist.

Zudem ist eine Transformationseinheit 2T vorgesehen, die beispielsweise ebenfalls softwaretechnisch, insbesondere mit zusammen mit der Bereitstellungseinheit 2P gemeinsamem Zugriff auf eine gemeinsame Recheneinheit oder CPU, auf der Analysevorrichtung 2 implementiert ist. Diese Transformationseinheit 2T erstellt einen Vergleichs-Knowledge-Graph 10, und zwar in einer Fähigkeitsontologie. Die Fähigkeitsontologie ist mit dem Fähigkeits-Metamodell kompatibel, d.h. es ist eine Transformation des Fähigkeitsmetamodells, in dem ja der Vorlage-Knowledge-Graph vorliegt, in die Fähigkeitsontologie möglich. Dadurch werden der Vergleichs-Knowledge-Graph 10 und der Vorlage-Knowledge-Graph 20 direkt miteinander vergleichbar und können insbesondere auf Gemeinsamkeiten in der Graphstruktur hin analysiert werden.

Dieser erste Abgleich erfolgt in der Abgleicheinheit 2C, welche beispielsweise ebenfalls softwaretechnisch, insbesondere mit Zugriff auf eine mit der Bereitstellungseinheit 2P und der Transformationseinheit 2T gemeinsame Recheneinheit, implementiert ist. Der erste Abgleich umfasst ein Erstellen eines ersten Übereinstimmungsgrads zu jeder potentiellen Fähigkeitsinstanz 11, 12.

Gemäß dem ersten Ausführungsbeispiel gibt die Anlage aufgrund eines zu erfüllenden Produktionsplans Fähigkeiten vor, die eine oder mehrere Maschinen in der Anlage zu erfüllen haben. Eine geforderte Fähigkeit wird in einem Fähigkeits-Knowledge-Graph 21 beschrieben. Auch dieser Fähigkeits-Knowledge-Graph 21, der aus einem Repository der Analysevorrichtung 2 abgerufen wird, liegt beispielsweise direkt in der Fähigkeitsontologie vor. Nur mit diesen geforderten Fähigkeiten kann ein Produkt beispielsweise innerhalb einer vorgegebenen Zeit oder Güte in der Anlage gefertigt werden. Daher wird die neue Komponente 201 auf diese Fähigkeiten hin analysiert. Die im ersten Abgleichschritt identifizierten potentiellen Fähigkeitsinstanzen 11, 12 werden nun direkt mit dem Fähigkeits-Knowledge-Graph 21 verglichen.

Beispielsweise wird jede der identifizierten potentiellen Fähigkeitsinstanzen 11, 12 jeweils einzeln mit dem Fähigkeits-Knowledge-Graph 21 verglichen. Es wird ein zweiter Übereinstimmungsgrad ermittelt, um eine Fähigkeitsübereinstimmung R ermitteln zu können. Beispielsweise wird eine Fähigkeitsübereinstimmung R erkannt, wenn der zweite Übereinstimmungsgrad einen zugehörigen zweiten Grenzwert überschreitet. Beispielsweise werden auch Fähigkeitsübereinstimmungen R mit niedrigem zweiten Übereinstimmungsgrad erkannt und entsprechend als unsicher oder mit Abweichungen D versehen erkannt.

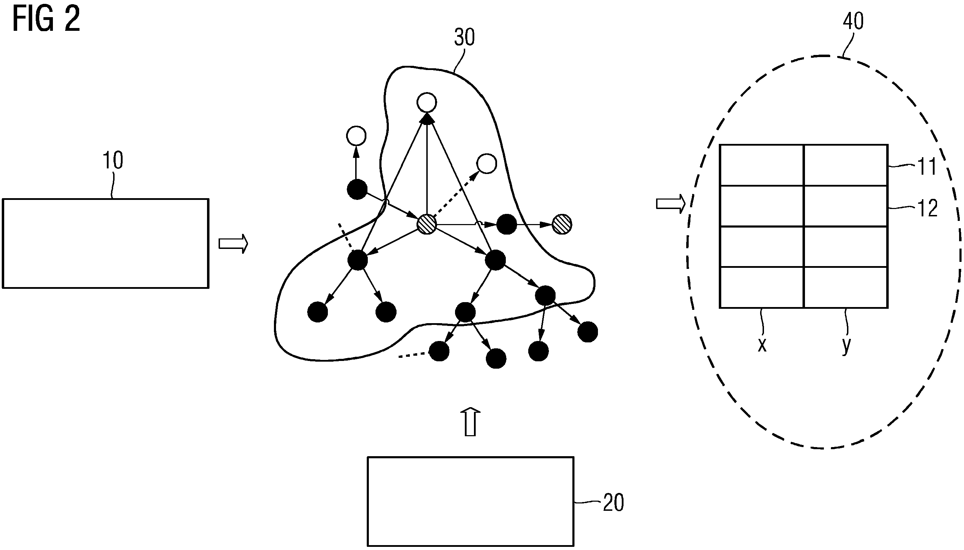

Figur 2 veranschaulicht den Schritt des ersten Abgleichens, wobei der Vergleichs-Knowledge-Graph 10 und der Vorlage-Knowledge-Graph 20 in Hinblick auf ihre logischen Datenverknüpfungen analysiert werden. Das Ergebnis kann derart veranschaulicht werden, dass Knoten innerhalb der Wolke 30 im Vorlage-Knowledge-Graph 20 und im Vergleichs-Knowledge-Graph 10 aufzufinden sind und somit der Subgraph innerhalb der Wolke 30 aus dem Vorlage-Knowledge-Graph 20 identisch im Vergleichs-Knowledge-Graph 10 aufgefunden wurde. Die Adressen zu Subgraphen von potentiellen Fähigkeitsinstanzen 11, 12 werden beispielsweise in einer Liste 40 in einer ersten Spalte x und in einer Reihenfolge mit absteigendem ersten Übereinstimmungsgrad, der in Spalte y hinterlegt ist, gespeichert. Beispielsweise wird die Adresse eines Knotens hinterlegt, der aufgrund des Vorlage-Knowledge-Graphs 20 als ein solcher Typ von Knoten erkannt wird, der einen Skill definiert.

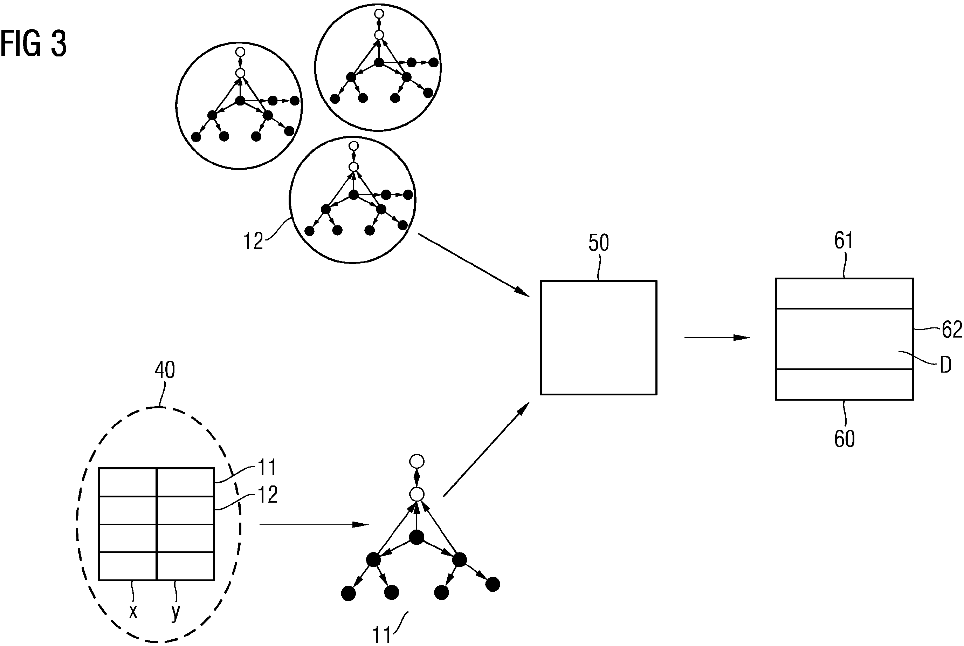

In Figur 3 ist schließlich der Schritt des zweiten Abgleichens illustriert. Gemäß einem zweiten Ausführungsbeispiel werden die potentiellen Fähigkeitsinstanzen nicht mit einem Fähigkeits-Knowledge Graph aus einem Repository der Anlage, das diese wie im ersten Ausführungsbeispiel vorgibt, verglichen, sondern mehrere erkannte potentielle Fähigkeitsinstanzen werden untereinander verglichen. Beispielsweise werden die mehreren potentiellen Fähigkeitsinstanzen zu einem gemeinsamen Zeitpunkt aus dem Informationsmodell gewonnen und dann miteinander verglichen. Ebenso ist es aber auch möglich, dass über die Zeit in der Anlage potentielle Fähigkeitsinstanzen aufgefunden werden und diese mit später aus einem Informationsmodell gewonnenen potentiellen Fähigkeitsinstanzen verglichen werden. Somit soll sichergestellt werden, dass Inkonsistenzen mit früheren Skill-Beschreibungen, oder Aktualisierungen in Skill-Beschreibungen oder Dopplungen in einem Informationsmodell erkannt werden.

Aus der Liste 40 mit potentiellen Fähigkeitsinstanzen wird beispielsweise eine potentielle Fähigkeitsinstanz 11 mit einem zugehörigen Subgraph des gespeicherten Knotens näher analysiert und mit einer potentiellen Fähigkeitsinstanz 12 verglichen, die aus dem Informationsmodell eines zuvor analysierten Informationsmodells eines weiteren Teilnehmers extrahiert wurde. Die beiden Subgraphen werden einem sogenannten Graph-Similarity-Check 50 unterzogen, dessen Ergebnis darin besteht, einen zweiten Übereinstimmungsgrad anzugeben. Beispielsweise wird beim Graph-Similarity-Check ein Graph-Matching-Verfahren analog zum ersten Abgleich durchgeführt, wobei ein Vorlage-Graph nun aus der Liste der Fähigkeitsinstanzen entnommen wird und das Template bildet.

Vorteilhafterweise erfolgt bei dem vorgeschlagenen Verfahren kein aufwändiger Abgleich von früheren identifizierten Fähigkeitsinstanzen - bzw. gemäß dem ersten Ausführungsbeispiel von Fähigkeits-Knowledge-Graphen aus einem Anforderungs-Repository - mit dem gesamten Informationsmodell eines neuen Teilnehmers, sondern es werden nur Similarity-Check-Verfahren mit den im ersten Abgleich aufgefundenen potentiellen Fähigkeitsinstanzen nötig. Beispielsweise ergibt das Graph-Matching-Verfahren, dass die zwei abgeglichenen Graphen 11 und 12 lediglich in Hinblick auf eine zusätzliche Verknüpfung in der bereits früher identifizierten Fähigkeitsinstanz 12, die eine Namensgebung des den Skill definierenden Knotens betreffen, voneinander abweichen. Beispielsweise wird dieses Ergebnis in Form einer Liste 60 ausgegeben, die den Skill in einer Headerzeile 61 definiert, beispielsweise als erkannten Skill "Insert", und im Folgenden in einer Abweichungszeile 62 alle Eigenschafts-Axiome listet, bei denen Abweichungen D festgestellt wurden, beispielsweise bei der Namensgebung generell oder bei einer verwendeten Nomenklatur bei der Namensgebung des Skills. Beispielsweise wird ferner ein Similarity Score als zweiter Übereinstimmungsgrad angegeben. Insbesondere werden Paare von Fähigkeitsinstanzen mit hohem Wert beim ermittelten zweiten Übereinstimmungsgrad gelistet und beispielsweise nach dem Wert absteigend sortiert gelistet.

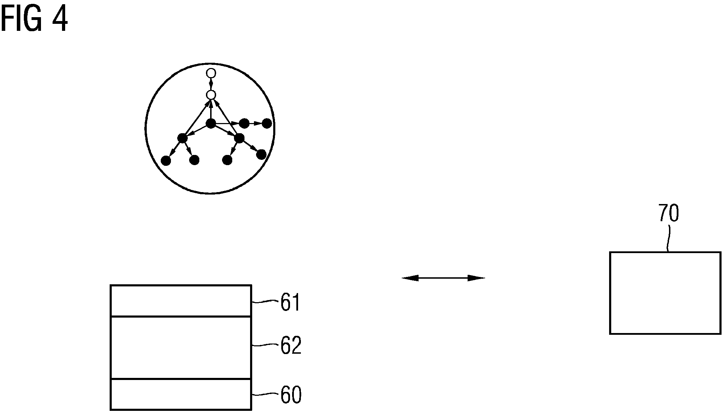

Figur 4 stellt schematisch dar, wie aus den beim zweiten Abgleich analysierten Abweichungen Ausgabenachrichten 70 erstellt werden. Beispielsweise werden solche Ausgabenachrichten zu allen aufgefundenen Eigenschaftensaxiomen, die nicht übereinstimmend aufgefunden und somit nicht verifiziert sind, erstellt. Beispielsweise werden alternativ oder zusätzlich aus den aufgefundenen Abweichungen und mittels Templates menschenlesbare Nachrichtentexte generiert wie beispielsweise der Text , "SkillInsert" in the skill repository is very similar to the OPC UA object "Insert". However their names are different.'

Die Erfindung betrifft ein Verfahren zur Fähigkeitsanalyse einer Komponente innerhalb einer industriellen Automatisierungsanlage sowie ein zugehöriges Computerprogrammprodukt und eine zugehörige Analysevorrichtung. Dabei wird in einem ersten Abgleich ein Vergleichs-Knowledge-Graph aus einem Informationsmodell mit einem Vorlage-Knowledge-Graph verglichen zum Identifizieren von potentiellen Fähigkeitsinstanzen und in einem zweiten Abgleich mindestens eine der erkannten potentiellen Fähigkeitsinstanzen mit mindestens einem zu der Automatisierungsanlage zugehörigen Fähigkeits-Knowledge-Graphen verglichen zum Ermitteln einer Fähigkeitsübereinstimmung in Abhängigkeit von einem ermittelten zweiten Übereinstimmungsgrad.

## Patentansprüche

1. Computerimplementiertes Verfahren zur Fähigkeitsanalyse einer Komponente innerhalb einer industriellen Automatisierungsanlage (200) mit mehreren Komponenten (201, 202,...), aufweisend die Schritte:
- Bereitstellen mindestens eines Vorlage-Knowledge-Graphs (20), wobei der mindestens eine Vorlage-Knowledge-Graph (10) mittels eines Fähigkeits-Metamodels eine Fähigkeitsstruktur semantisch beschreibt,
- Erhalten eines Informationsmodells (100) mindestens einer Komponente (201) der mehreren Komponenten (201, 202,...),
- Transformieren des Informationsmodells (100) in eine mit dem Fähigkeits-Metamodell kompatible Fähigkeitsontologie zum Erstellen eines Vergleichs-Knowledge-Graphs (10),
- Abgleichen des Vergleichs-Knowledge-Graphs (10) mit dem Vorlage-Knowledge-Graph (20) zum Identifizieren von potentiellen Fähigkeitsinstanzen (11, 12,...) im Informationsmodell (100) in Abhängigkeit von einem ermittelten ersten Übereinstimmungsgrad,
- Abgleichen mindestens einer der erkannten potentiellen Fähigkeitsinstanzen (11) mit mindestens einem zu der Automatisierungsanlage (200) zugehörigen Fähigkeits-Knowledge-Graphen (12, 21) zum Ermitteln einer Fähigkeitsübereinstimmung (R) in Abhängigkeit von einem ermittelten zweiten Übereinstimmungsgrad.

2. Verfahren nach Anspruch 1, wobei der Fähigkeits-Knowledge-Graph (12, 21) in einer in die Fähigkeitsontologie transformierbaren Ontologie vorliegt.

3. Verfahren nach Anspruch 1 oder 2, wobei der Fähigkeits-Knowledge-Graph (21) Eigenschaften einer von der Automatisierungsanlage (200) benötigten oder geforderten Fähigkeit semantisch beschreibt.

4. Verfahren nach Anspruch 1 oder 2, wobei der Fähigkeits-Knowledge-Graph durch eine weitere identifizierte Fähigkeitsinstanz (12) gebildet wird.

5. Verfahren nach einem der vorstehenden Ansprüche, wobei eine potentielle Fähigkeitsinstanz (11, 12,...) erkannt wird, wenn der ermittelte erste Übereinstimmungsgrad einen ersten Grenzwert überschreitet.

6. Verfahren nach einem der vorstehenden Ansprüche, wobei der erste Grenzwert einen Anteil an Eigenschaften des Vorlage-Knowledge-Graphen (20) festlegt.

7. Verfahren nach einem der vorstehenden Ansprüche, wobei das Informationsmodell (100) im OPC UA Standard empfangen wird.

8. Verfahren nach einem der vorstehenden Ansprüche, wobei zum Bereitstellen des Vorlage-Knowledge-Graphen (20) ein OPC UA Informationsmodell um Fähigkeits-spezifische Modellierung erweitert wird und als OPC UA-basiertes Fähigkeits-Metamodell bereitgestellt wird.

9. Verfahren nach einem der vorstehenden Ansprüche, wobei der Vorlage-Knowledge-Graph (20) in der Fähigkeitsontologie des Vergleichs-Knowledge-Graphen (10) bereitgestellt wird.

10. Verfahren nach einem der vorstehenden Ansprüche, wobei die Fähigkeitsübereinstimmung (R) erkannt wird, wenn der ermittelte zweite Übereinstimmungsgrad einen zweiten Grenzwert überschreitet.

11. Verfahren nach einem der vorstehenden Ansprüche, wobei das Abgleichen mindestens einer der erkannten potentiellen Fähigkeitsinstanzen (11) mit dem mindestens einen Fähigkeits-Knowledge-Graphen (12, 21) ein Ermitteln von Abweichungen (D) umfasst.

12. Verfahren nach Anspruch 11, wobei die ermittelten Abweichungen (D) in der Fähigkeitsontologie oder der Ontologie des Fähigkeits-Knowledge-Graphen beschrieben werden.

13. Verfahren nach Anspruch 11 oder 12, wobei die ermittelten Abweichungen (D) und/ oder die Fähigkeitsübereinstimmung (R) mittels Mitteilungen ausgegeben werden.

14. Verfahren nach einem der Ansprüche 11 bis 13, wobei die mindestens eine erkannte potentielle Fähigkeitsinstanz (11) und/ oder der mindestens eine Fähigkeits-Knowledge-Graph (12, 21) basierend auf der ermittelten Abweichung korrigiert werden.

15. Computerprogrammprodukt das Mittel zur Durchführung des Verfahrens nach einem der Ansprüche 1 bis 14 aufweist, wenn das Computerprogramm auf einer programmgesteuerten Einrichtung zur Ausführung gebracht wird.

16. Analysevorrichtung (2) einer industriellen Automatisierungsanlage (200) mit mehreren Komponenten (201, 202,...), aufweisend
- eine Schnittstelle (2I) zum Erhalten eines Informationsmodells (100) mindestens einer Komponente (201) der mehreren Komponenten (201, 202,...),
- eine Bereitstellungseinheit (2P) zum Bereitstellen mindestens eines Vorlage-Knowledge-Graphs (20), wobei der mindestens eine Vorlage-Knowledge-Graph (20) mittels eines Fähigkeits-Metamodels eine Fähigkeitsstruktur semantisch beschreibt,
- eine Transformationseinheit (2T) zum Transformieren des Informationsmodells in eine mit dem Fähigkeits-Metamodell kompatible Fähigkeitsontologie zum Erstellen eines Vergleichs-Knowledge-Graphs (10),
- eine Abgleicheinheit (2C) zum Abgleichen des Vergleichs-Knowledge-Graphs (10) mit dem Vorlage-Knowledge-Graph (20) zum Identifizieren von potentiellen Fähigkeitsinstanzen (11, 12,...) im Informationsmodell (100) in Abhängigkeit von einem ermittelten ersten Übereinstimmungsgrad, sowie zum Abgleichen mindestens einer der erkannten potentiellen Fähigkeitsinstanzen (11) mit mindestens einem zu der Automatisierungsanlage zugehörigen Fähigkeits-Knowledge-Graphen (12, 21) zum Ermitteln einer Fähigkeitsübereinstimmung (R) in Abhängigkeit von einem ermittelten zweiten Übereinstimmungsgrad.
